# EUROPÄISCHE PATENTSCHRIFT

(11) **EP 2 749 711 B1**
(45) Veröffentlichungstag und Bekanntmachung des Hinweises auf die Patenterteilung: **02.03.2022**
(21) Anmeldenummer: 13199341.2
(22) Anmeldetag: 23.12.2013
(51) Int. Cl.: E04F 15/18, F24D 13/02, E04F 13/04, H05B 3/34, E04B 1/92

(54) **MULTIFUNKTIONALES FASERGEWEBE**
MULTIFUNCTIONAL FIBROUS FABRIC
TISSU EN FIBRES MULTIFONCTION

(30) Priorität: 28.12.2012 DE 102012224514
(43) Veröffentlichungstag der Anmeldung: 02.07.2014
(73) Patentinhaber: VITRULAN Technical Textiles GmbH, 96515 Sonneberg (DE)
(72) Erfinder: DORSCH, Wolfgang, 95615 Marktredwitz (DE)
(74) Vertreter: Lindner Blaumeier Patent- und Rechtsanwälte

(56) Entgegenhaltungen:
- EP-A1- 2 706 158
- DE-A1- 2 132 543
- DE-A1- 2 537 342
- DE-A1- 10 331 177
- DE-U1- 29 923 709

## Beschreibung

Die Erfindung betrifft ein multifunktionales Fasergewebe mit verbesserten Produkteigenschaften.

Aus dem Stand der Technik sind viele Fasergewebe bekannt, darunter auch Glasfasergewebe, die unter anderem auch zur Stabilisierung von zu verputzenden Wandflächen im Bauwesen eingesetzt werden. So ist z.B. in DE 102 16 670 A1 ein Verfahren zur Herstellung eines textilen Gitters beschrieben, das eine Beschichtung aufweist, welche mit einer Mehrzahl von Körnern zur Erhöhung der Oberfläche des textilen Gitters bestückt ist. In der Regel werden die textilen Gitter mit den Körnern besandet. Zweck einer solchen Beschichtung (Besandung) ist es unter anderem, eine leichtere Verzahnung mit mineralischen Bindermatrizes zu erreichen und dadurch einen innigeren Verbund solcher armierenden Fasergewebe mit üblichen Putzschichten zu erzielen.

Weiterhin sind mit elektrischem Strom beheizbare Platten und Gewebe bekannt, die z.B. Carbon-Vliese als funktionelle Heizkomponente enthalten. Kohienstoff-Fasern sind bis zu Temperaturen von 2500 °C hochfest, ca. viermal leichter als Stahl, korrosionsbeständig und gute elektrische und Wärmeleiter. Sie werden z.B. aus Polyacrylnitril, Celluloseacetat oder aus dem teerartigen Rückstand der Erdölraffination produziert. Der Faserherstellung folgen Stabilisierung, Carbonisation und Graphitisierung, so dass man hochfeste (HF-) Kohlenstoff-Fasern und sogenannte Hochmodul- (HM-)Kohlenstoff-Fasern gewinnt (Römpp Lexikon für Chemie, Online Version 3.37, Georg Thieme Verlag, Stuttgart). Solche beheizbare und zudem flexible Textilsubstrate erbringen zwar teilweise schon gute elektrische Leistungen, lassen sich aber zumeist nicht ohne Weiteres zweckmäßig in den Gesamtaufbau eines Verbundes einbetten, da sie infolge ihrer geschlossenflächigen Struktur eher trennend als stabilisierend oder armierend wirken Dies ist natürlich für Anwendungen im Bauwesen, in denen es in erster Linie auf die mechanische Stabilisierung von Flächen, Schichten und ganz allgemein von häufig mineralischen Aufbauten und Systemen geht, ein bedeutsamer Nachteil.

Ein gattungsgemäßes Fasergittergewebe ist aus DE 299 23 709 U1 bekannt, welche eine Armierung in Form sich kreuzender Fäden mit im wesentlichen parallel und in Abständen zueinander angeordneten, elektrisch leitenden Metallseelen betrifft. Die Metallseelen erstrecken sich mit einem Faden oder sind in diesen eingearbeitet. Ferner sind die Fäden der Armierung mit einer elektrisch leitenden Appretur versehen.

Der Erfindung liegt daher die Aufgabe zugrunde, ein flexibles Fasergewebe bereitzustellen, das sich in eine erstarrungsfähige flüssige oder viskose Matrix sandwichartig einbetten oder sich anderweitig fest mit dieser als Armierung oder Träger mit anderen Objekten kombinieren lässt und zugleich in der Lage ist, diese Matrix oder Objekte aufgrund seines abgestimmten Ohmschen Widerstandes zu erwärmen.

Eine weitere Aufgabe der hier dargelegten Erfindung besteht in der Bereitstellung eines Komposites (Verbundmaterials) aus Fasergewebe und einem Vlies oder einer Folie.

Erfindungsgemäß bereitgestellt wird ein multifunktionales Fasergewebe mit den Merkmalen des Anspruchs 1 als Flächenware, bestehend aus kreuzweise in Gewebeart verbundenen Fasermaterialien wie Rovings, Garne, Zwirne, Stapelfaservorgarne, wobei das Fasergewebe ein beschichtetes Fasergittergewebe ist. Ein Fasergittergewebe, das Gitteröffnungen im Bereich von 1x1 mm bis 20x20 mm hat; die Gitterstruktur in stabiler Form vorliegt mit einer Festigkeit im Bereich von 500 bis 5000 N/5cm, gemessen mit dem Streifen-Zugversuch nach DIN EN ISO 13934-1, bildet das Basismaterial. Erfindungsgemäß sind die einzelnen Fasermaterialien des Fasergittergewebes mit einer Appretur und darüber mit einer elektrisch leitfähigen Schicht ummantelt bis zu einer Dicke des beschichteten Fasergittergewebes von 0,2 mm bis 3 mm. Die Dehnung des beschichteten Fasergittergewebes liegt im Bereich von 2 bis 25 % gemessen mit dem Streifen-Zugversuch nach DIN EN ISO 13934-1, abhängig vom eingesetzten Fadenmaterial.

Ein besonders bevorzugtes Fasergittergewebe ist ein Glasfaser-Gittergewebe. Aber auch andere Fasern aus mineralischen, synthetischen oder nativen Materialien sind einsetzbar, beispielsweise Polyestergittergewebe. Bevorzugt ist ein Glasfaser-Gittergewebe mit Appretur, auf der die leitfähige Schicht aufgetragen ist.

Mit Hilfe der vorgesehenen Gitteröffnungen z. B. eines Glasfaser-Gittergewebes werden bei Einlegung des Gitters in ein erstarrungsfähiges flüssiges oder viskoses Matrixsubstrat und Abdeckung von der gegenüberliegenden Seite mit demselben Matrixsubstrat Verbindungsflächen mit den Gitteröffnungen geschaffen, die von dem Matrixsubstrat ausgefüllt werden. Nach Aushärtung der Matrix gewährleisten diese Verbindungsflächen die volle Festigkeit des Matrixsubstrates. Dabei werden die Gitteröffnungen so gewählt, dass sowohl die Festigkeit als auch andere gewünschte Eigenschaften des Matrixsubstrates erreicht werden, beispielsweise Trocknung und damit Feuchtigkeitsabgabe an die Umgebung. Dies ist beispielsweise beim Verputzen von Wandflächen oder anderen Bauwerksteilen ein wichtiger Faktor.

Darüber hinaus erhöht das Gittergewebe die Stabilität der entsprechenden Fläche und dient je nach Faserstärke entsprechend auch als Armierung. Bevorzugte Zugfestigkeiten bei Gittergeweben liegen im Bereich von 800 bis 2000 N/5 cm. Sogenannte Panzergewebe weisen Zugfestigkeiten von 4000 - 5500 N/5 cm auf. Dementsprechend sind auch die Flächengewichte, die zwischen 55 und 330 g/m² liegen.

Bei einem bevorzugten Gittergewebe aus Glasfasern liegt die Dehnung im Bereich von 2 bis 5%.

Die Dicke des unbeschichteten Fasermaterials liegt dabei im Bereich von 0,1 - 1,5 mm, vorzugsweise 0,3 - 0,6 mm. Die Dicke des beschichteten Fasergittergewebes ist 0,2 bis 3 mm, vorzugsweise 0,5 - 1,5 mm. Es sei jedoch in diesem Zusammenhang darauf hingewiesen, dass die Dicke der heizenden Schicht auch direkten Einfluss ausübt auf die spezifische Wärmeleistung (W/m²) des hier vorgestellten multifunktionalen Fasergewebes.

Infolge des sehr dünnen Schichtaufbaues von bevorzugt < 3 mm sind mit dem erfindungsgemäßen beschichteten Fasergittergewebe gute Heizleistungen bei gleichzeitiger guter Armierungsfunktion auch an solchen Anwendungsflächen erreichbar, wo sonst nur unter Schwierigkeiten oder gar nicht beide Funktionen realisiert werden können, z.B. in Fensterlaibungen.

Die Gitteröffnungen liegen vorzugsweise im Bereich von 2x2 mm bis 15x15 mm, insbesondere 3x3 mm bis 10x10 mm. Ganz besonders bevorzugt sind Gitteröffnungen von 4x4 mm, 6x6 mm und 10×10 mm.

Mit steigender Gitteröffnungsgröße nimmt allgemein auch die Fadenstärke zu, wobei die Fäden in ihrem Querschnitt nicht nur rund sind sondern auch eine flache oder ellipsoide Form haben können.

Glasfaserrovings oder -garne für ein erfindungsgemäßes Glasfaser-Gittergewebe können nach bekannten Verfahren hergestellt werden. Besonders geeignete Glasfasertypen sind solche aus E-Glas, aber auch andere Glasarten wie ECR-Glas, C-Glas oder AR-Glas können eingesetzt werden.

Sofern E-Glas speziell für Armierungen und Beheizungen im Mauerbereich und bei Kontakt mit alkalihaltigen Putzen oder Mörteln eingesetzt wird, kann das Glasfaser-Gittergewebe vorzugsweise mit einer alkalibeständigen Appretur versehen werden.

Speziell bevorzugt sind E-Glas, ECR-Glas und C-Glas.

Das vorzugsweise gewebte Gitter kann nach seiner Herstellung zuerst mit der Appretur versehen werden, insbesondere zur Sicherstellung einer hinreichenden Alkalibeständigkeit solcher multifunktionaler Gewebe in alkalischen Umgebungen. Die Appretur besteht aus synthetischen Materialien wie Styrolbutadienkautschuk, Acrylat, PVC, Polyurethan oder Ethylenvinylacetat und wird beispielsweise durch Tauchen, Sprühen, manuelles Auftragen, Rakeln usw. auf ein Fasergittergewebe aufgebracht.

Nach Auftragen der verwendeten Appretur erfolgt ein (je nach Polymertype) Trocknungs- und Vernetzungsvorgang, und man erhält ein formstabiles, verschiebefestes Gitter, bei dem sich die einzelnen Gittermaschen nicht mehr ohne weiteres verschieben lassen.

Auf das mit der Appretur beschichtete Gittergewebe wird dann eine elektrisch leitfähige Schicht mit einem bestimmten Ohmschen Widerstand (im Folgenden als Heizschicht oder Heizbeschichtung bezeichnet) aufgebracht.

Das Auftragen der leitfähigen Schicht auf ein Rohgewebe ist grundsätzlich, aber nicht zur Erfindung gehörig, ebenso möglich. Es wurde dabei jedoch gefunden, dass sowohl Alkalischutzwerte als auch die Verschiebefestigkeit innerhalb der Gitterstruktur gegebenenfalls schlechter werden, wenn die Heizbeschichtung nur auf das Rohgewebe aufgetragen wird. Eine Verbesserung der Heizleistung ist nämlich insbesondere von der Aufnahmefähigkeit und Durchtränkbarkeit des Fadenmaterials abhängig. Besonders vorteilhaft ist daher aus dieser Sicht das erfindungsgemäße Fasergittergewebe, insbesondere ein Glasfaser-Gittergewebe, bei dem die elektrisch leitfähige Schicht über einer Appreturschicht des Gewebes liegt.

Die Beschichtung für die Heizschicht erfolgt durch Auftragen einer Dispersion, die als leitfähiges Material bevorzugt Kohlenstoff-Nanofasern oder -röhrchen, Graphit, Kohlenstoffplättchen, sonstige Kohlenstoffteilchen oder leitfähige Polymerteilchen umfasst. Weiterhin sind in der Dispersion i.d.R. Wasser, ein Bindemittel oder Bindemittelgemische und/oder Anti-Schaummittel enthalten. Gegebenenfalls können weitere Dispersionshilfsstoffe zugesetzt werden, sofern die Anwendung des Gewebes, der Beschichtungsprozess oder auch der Heizprozess dies erfordern.

Die Dispersion kann durch bekannte Verfahren wie Tränken, Tauchen, Sprühen, Rakeln, Pinseln usw. aufgetragen werden.

Die Dispersion umfasst 40 - 60 Gew.-% Trockenbestandteile aus leitfähigem Material und Bindemittel. Das Auftragen der Dispersion kann je nach Verfahrensart und Anwendungszweck mehrfach wiederholt werden. Das im Trockenzustand elastische Bindemittel kann ebenfalls ein synthetisches Polymeres sein wie z. B. Styrolbutadienkautschuk, Acrylate, PVC, Polyurethane und Ethylenvinylacetat.

Das erfindungsgemäße Fasergittergewebe hat einschließlich der Beschichtungen nach dem Trocknen eine Dicke vorzugsweise im Bereich von 0,8 mm bis weniger als 2 mm, besonders bevorzugt 0,5 bis 1,5 mm.

Eine bevorzugte Ausführungsform des erfindungsgemäßen Gittergewebes sind Rollenformen oder vorgefertigte Zuschnitte mit bestimmten Abmaßen, z. B. Zuschnitte von 100 × 200 cm oder 50 × 100 cm.

Bevorzugt werden die Leiterbahnen zur Stromverteilung und die Kontaktlaschen für den elektrischen Anschluss erst am Einsatzort verlegt. Es kann aber auch eine Integrierung dieser in den vorgefertigten Zuschnitt erfolgen.

Die Stromzuführung für das Gittergewebe liegt im Niederspannungsbereich bei 12 bis 60 V, wobei in Nassbereichen (z.B. Bäder) maximal 24 V eingesetzt werden. Sowohl Gleichstrom als auch Wechselstrom sind einsetzbar. Auch von Autobatterien mit 12 oder 24 V kann die Stromversorgung erfolgen.

Unter dem Begriff "Gewebe" im Sinne der Erfindung wird sowohl ein übliches Gewebe mit einem alternierend über und unter dem Kettfaden verlaufenden Schussfaden verstanden als auch ein Gelege oder Gewirk oder ein vergleichbar hergestelltes textiles Flächengebilde.

"Gitteröffnungen" sind die nach dem Verkreuzen der Fäden zwischen diesen entstehenden offenen Quadrate oder Rechtecke. Die lichte Gitteröffnung wird von Fadenende bis Fadenanfang des nächsten Feldes gemessen.

"Beschichtung" ist das auf das Fasergitter nach dessen Herstellung aufgetragene und nach Trocknung in fester elastischer Form vorliegende Gemisch aus wenigstens Bindemittel und leitfähigem Material oder im Falle der Appretur nur das Bindemittel.

"Fasermaterialien" bestehen aus Fasern oder Filamenten aus verschiedenen Grundstoffen und können in Form von Rovings (z.B. bei Glas), Garnen, Zwirnen, Stapelfaservorgarnen und dergleichen vorliegen.

Eine besondere Ausführungsform der Erfindung ist Fasergittergewebe, das mit einem Vlies oder einer Folie als Komposit kombiniert ist. Bevorzugt ist dies ein Glasfaser-Gittergewebe aus Glasfasergarnen und Glasfaserrovings auf einem Glasfaservlies. Beispielsweise ergibt sich ein stabiler Komposit, wenn ein Glasfasergitter nach dem Auftragen einer Appretur sowie der Heizbeschichtung oder nur nach Auftragen der Heizbeschichtung noch feucht auf das Vlies aufgepresst wird.

Bei den Vliesen können unterschiedliche Qualitäten eingesetzt werden, z. B. bei Glasvlies solche mit Flächengewichten von 30 bis 120 g/m².

Sämtliche Komposite können auf der Rückseite, vorzugsweise auf der Rückseite eines Vlieses, zusätzlich eine Selbstklebefolie aufweisen, die gegebenenfalls (z.B. zum Transport) nach außen mit einem Trennpapier abgedeckt ist. Diese zusätzliche Funktion erlaubt es dem Verarbeiter, ein solches multifunktionales Gewebe leichter zu applizieren, bspw. an Wänden, Böden oder Decken.

Eine weitere bevorzugte Ausführungsform ist eine in Form von Zuschnitten z. B. von 100 × 200 cm als Komposit, bei dem die Rückseite des Faservlieses, z. B. eines Glasfaservlieses (Rückseite = die dem Gitter abgewandte Seite) eine Selbstklebefolie trägt, die ihrerseits noch ein Trennpapier vollflächig aufweist. Das Trennpapier wird am Einsatzort abgezogen, und der Komposit mit der Klebeseite der Klebefolie auf den Untergrund aufgebracht.

Ein besonderer Vorteil bei dieser Ausführungsform ergibt sich durch die sehr geringe Dicke des Komposites von ca. 2-5 mm, insbesondere 3-4 mm.

Ganz allgemein kann eine Reduzierung der Gesamthöhe eines beheizbaren Wand- oder Fußbodenaufbaues, speziell eines Fußbodenaufbaues, um 30 bis 50 % erreicht werden, insbesondere 30- 40 % im Vergleich zu wasserführenden Heizsystemen.

Insbesondere bei Einsatz im Fußbodenbereich, wo die Höhe von Trittschalldämmung, üblicher Fußbodenheizung mit wasserführenden Rohrleitungen und Entkoppelungsmatte unter dem eigentlichen Oberbelag (Fliesen, Parkett, Laminat usw.), besonders bei der Altbausanierung, aber auch im Neubaubereich oftmals sehr kritisch ist wegen der Gesamthöhe, die mit diesem Aufbau erreicht wird, kann erfindungsgemäß eine deutliche Reduzierung der Gesamthöhe erreicht werden, z. B. von 55 mm auf 35 mm inkl. Oberbelag. Darüber hinaus werden die Armierung und die Entkoppelung von Kräften der Bodenplatte und im Oberbelag wirkenden Kräften verbessert und die Wärmeverteilung (Rohrleitungsmäander versus Gitterstruktur) deutlich verbessert.

Es können grundsätzlich anstelle von Vliesen auch Folien eingesetzt werden, z.B. solche aus PET oder kombiniert mit Aluminium PET-Alu-PET und andere.

Insgesamt sind besondere Vorteile des erfindungsgemäßen Fasergittergewebes seine Multifunktionalität, nämlich
- gleichzeitige Stabilisierungs- und Heizfunktion bei Einbettung in Bauteilen wie Wänden, Fußböden, Decken
- gut handhabbare Zuschnitte für Kompositsysteme mit spezieller Einsatzmöglichkeit beim Aufbau beheizbarer Fußböden in Bereichen mit besonders geringen Einbauhöhen
- gleichzeitig Entkoppeln, Armieren und Heizen in besonderen Bereichen wie z. B. Fußböden mit Hilfe von Kompositen mit Faservliesen
- gerichtete Wärmeabgabe dadurch, dass bei einem Verbundmaterial einseitig ein auch thermisch isolierendes Vlies aufgebracht ist
- durch Änderung der Leitfähigkeit bei Einwirkung von Feuchtigkeit Ermittlung von Leckagen in verschiedenen Bereichen
- beheizbares Basisgerüst für katalytische, chemische oder biotechnologische Prozesse.

Eine weitere Ausführungsform der Erfindung besteht darin, zwei Fasergittergewebe, insbesondere Glasfaser-Gittergewebe, als Komposit bereitzustellen, bei dem beide Gewebe unterschiedliche Gitteröffnungen haben und nur das Gittergewebe mit den kleineren Gitteröffnungen mit der elektrisch leitfähigen Schicht ummantelt ist.

Die Gesamtdicke liegt dabei noch immer im Bereich von 1 bis 3 mm, jedoch kann die Heizleistung mit diesem Aufbau zusätzlich erhöht werden.

Bei dieser Ausführungsform kann z.B. ein Fasergittergewebe mit Gitteröffnungen von 10 × 10 mm mit einem Fasergittergewebe mit Gitteröffnungen von 2 × 2 mm kombiniert werden, wobei letzteres mit der Heizschicht ummantelt ist.

Eine weitere Ausführungsform der Erfindung besteht darin, dass ein erfindungsgemäßes Fasergittergewebe, insbesondere Glasfaser-Gittergewebe, zusätzlich an kleinen Flächen im Bereich von 100 bis 400 cm² mit einem in der Fläche verteilten Kohlenstofffaden oder mit Kohlenstoff laminierten Faden versehen ist, um eine spezielle Heizfunktion in dieser Fläche zu erzielen. Der Faden oder Roving kann z.B. durch einen gängige Textilverarbeitungstechnik aufgebracht werden, z.B. durch Sticken, Weben, Kleben usw.

Die Erfindung betrifft auch die Verwendung eines multifunktionalen Fasergewebes als Flächenware zur Armierung und gleichzeitigen Beheizung von Wand-, Decken- und Bodenflächen in Gebäuden, wobei das Fasergewebe aus kreuzweise in Gewebeart verbundenen Fasermaterialien besteht und wobei das Fasergewebe ein Faser-Gittergewebe ist, das Gitteröffnungen im Bereich von 1x1 mm bis 20x20 mm hat; die Gitterstruktur in stabiler Form vorliegt mit einer Festigkeit im Bereich von 500 bis 5000 N/5cm, gemessen mit dem Streifen-Zugversuch nach DIN EN ISO 13934-1; die einzelnen Fasermaterialien des Fasergittergewebes mit einer Appretur und darüber mit einer elektrisch leitfähigen Schicht ummantelt sind bis zu einer Dicke des Fasergittergewebes von 0,2 mm bis 3 mm und die Dehnung des beschichteten Fasergittergewebes im Bereich von 2 bis 25 % liegt, gemessen mit dem Streifen-Zugversuch nach DIN EN ISO 13934-1.

Die Erfindung betrifft auch die Verwendung des multifunktionalen Fasergewebes der Erfindung zur Beheizung von Rohrleitungen, Behältern und anderen unregelmäßigen Flächen.

Die Erfindung betrifft weiterhin die Verwendung eines Komposites aus Fasergittergewebe und Faservlies, insbesondere Glasfaser-Gittergewebe und Glasfaservlies, wobei das Fasergittergewebe die erfindungsgemäß kennzeichnenden Merkmale zu Gitteröffnungen, Festigkeit, Dehnung, Heizschicht und Dicke hat, zur Entkopplung, Armierung und Beheizung von Wand-, Boden- und Deckenflächen, insbesondere von Fußbodenflächen.

Dabei besteht ein weiteres Merkmal darin, dass die Gesamthöhe eines Komposites zur Beheizung und Armierung nur 2 bis 5 mm beträgt, insbesondere 3 - 4 mm.

Die Erfindung soll nachstehend durch Beispiele näher erläutert werden.

### Beispiel 1

Ein Glasfaser-Gittergewebe vom Typ SD.6511 K (Vitrulan Technical Textiles GmbH, Haselbach, Deutschland) mit einer Gitteröffnung von 7x7 mm, einer Festigkeit von 2000 N/5 cm und einer Dehnung von 3,9 %, das mit einem StyrolButadien-Kautschuk-Bindemittel (SBR) foulardiert worden ist, wird mit einer Suspension von SBR-Bindemittel und Graphen^{®}-Plättchen im Tauchverfahren behandelt. Die Schichtdicke des Gitters beträgt nach der Trocknung 1,0 bis 1,1 mm.

Das Glasfaser-Gittergewebe wird als Zuschnitt von 200 × 100 cm nach dem Aufbringen von Leiterbahnen und Kontaktlaschen unmittelbar vor dem Einbetten in eine Anputzschicht vollständig mit Putz abgedeckt. Nach dem Trockenvorgang erfolgt der elektrische Anschluss an eine Stromquelle mit 24 V.

Die Armierungsfunktion führt zu einer sehr stabilen Putzstruktur ohne Rissbildung. Die Heizfunktion ist ausreichend bis gut.

### Beispiel 2

Es wird wie im Beispiel 1 gearbeitet, wobei ein Glasfaser-Gittergewebe vom Typ SD.4036 B (Vitrulan Technical Textiles GmbH, Haselbach, Deutschland) mit einer Gitteröffnung von 2,5x2,0 mm, einer Festigkeit von 500 N/5 cm und einer Dehnung von 2,5 % eingesetzt wird. Das beschichtete Gittergewebe wird in eine angeputzte Fensterlaibung eingebracht und dann entsprechend elektrisch angeschlossen. Es wird eine sehr gute Armierung ohne nachträgliche Rissbildung bei gleichzeitig guter Heizleistung erreicht.

### Beispiel 3

Ein Glasfaser-Gittergewebe Typ SDA.4508 M2 (Vitrulan Technical Textiles GmbH, Haselbach, Deutschland) wird nach der Foulardierung und unmittelbar nach der Beschichtung mit dem elektrisch leitfähigen Material auf ein Glasfaservlies mit einem Flächengewicht von 120 g/m² aufgebracht. Dabei entsteht nach dem Fügen der beiden Lagen ein fester Verbund (Komposit).

Nach dem Zuschnitt der Kompositbahn in Stücke von 200 × 100 cm wird auf die Vliesoberfläche eine Klebefolie mit außen liegendem Trennpapier geklebt.

In einen Fußbodenbereich mit Trittschalldämmung werden auf die Oberfläche der Dämmplatte mehrere Stücken des Komposits ausgelegt und nach Abziehen des Trennpapiers aufgeklebt. Es erfolgt dann das Aufbringen der Leiterbahnen unter gleichzeitigem Verbinden der einzelnen Kompositstücke mit diesen Leiterbahnen und der Anschluss der Stromzuführungen.

Danach wird auf das beschichtete Glasfaser-Gittergewebe eine dünne Schicht Fliesenmörtel aufgetragen und schließlich die Fliesen in das Kleberbett eingedrückt.

Bei einer Trittschalldämmungs-Bodenplatte von 20 mm Höhe ergibt sich bis zur Oberkante der Fliesen eine Gesamthöhe von 35 mm.

Das sonst übliche Einbringen von Heizrohren in eine spezielle Einbettungsschicht und zusätzliches Anbringen eines Wärmeleitbleches entfallen, und der Komposit übernimmt eine Armierungsfunktion, eine Entkoppelungsfunktion und eine Heizfunktion bei gleichzeitigem Gewinn von ca. 20-25 mm Raumhöhe.

## Patentansprüche

1. Multifunktionales beschichtetes Fasergittergewebe als Flächenware, bestehend aus kreuzweise in Gewebeart verbundenen Fasermaterialien mit Gitteröffnungen im Bereich von 1x1 mm bis 20x20 mm; wobei die Gitterstruktur in stabiler Form vorliegt, wobei die einzelnen Fasermaterialien des Fasergittergewebes mit einer Appretur versehen sind, **dadurch gekennzeichnet, dass** die einzelnen Fasermaterialien des Fasergittergewebes über der Appretur mit einer elektrisch leitfähigen Schicht ummantelt sind, wobei die Dicke des beschichteten Fasergittergewebes 0,2 mm bis 3 mm beträgt, wobei die Gitterstruktur eine Festigkeit im Bereich von 500 bis 5000 N/5cm, gemessen mit dem Streifen-Zugversuch nach DIN EN ISO 13934-1 aufweist, wobei die Dehnung im Bereich von 2 bis 25 % liegt, gemessen mit dem Streifen-Zugversuch nach DIN EN ISO 13934-1.

2. Fasergittergewebe nach Anspruch 1, **dadurch gekennzeichnet, dass** das mit einer Appreturschicht versehene Gittergewebe ein Glasfasergittergewebe ist.

3. Fasergittergewebe nach Anspruch 1 oder 2, **dadurch gekennzeichnet, dass** die Gitteröffnungen im Bereich von 3x3 mm bis 10×10 mm liegen.

4. Fasergittergewebe nach einem der Ansprüche 1 bis 3, **dadurch gekennzeichnet, dass** die elektrisch leitfähige Ummantelung ein im Trockenzustand elastisches Bindemittel und ein elektrisch leitfähiges Material ausgewählt aus Kohlenstoffpartikeln, Partikeln leitfähiger Polymerer und Gemischen davon, aufweist.

5. Fasergittergewebe nach einem der Ansprüche 1 bis 4, **dadurch gekennzeichnet, dass** die Appreturschicht und das Bindemittel ausgewählt ist aus einer Gruppe, die Styrolbutadienkautschuk, Acrylate, PVC, Polyurethane und Ethylenvinylacetat aufweist.

6. Fasergittergewebe nach einem der Ansprüche 1 bis 5, **dadurch gekennzeichnet, dass** die elektrisch leitfähigen Materialien aus diversen Kohlenstoffmodifikationen, wie Kohlenstoffplättchen (Graphene, Graphite) und/oder Kohlenstoff-Nanofasern oder Kohlenstoffnanoröhrchen (CNT's) sind.

7. Fasergittergewebe nach einem der Ansprüche 1 bis 6, **dadurch gekennzeichnet, dass** es zusätzlich an kleinen Flächen im Bereich von 100 bis 400 cm² Kohlenstofffaden oder mit Kohlenstoff laminierte Faden aufweist.

8. Komposit aus einem multifunktionalen beschichteten Fasergittergewebe gemäß einem der Ansprüche 1 bis 7 und mindestens einem weiteren unbeschichtetem Fasergittergewebe, wobei die Fasergittergewebe unterschiedlich große Gitteröffnungen besitzen und das Gittergewebe mit den kleineren Gitteröffnungen von der elektrisch leitenden Materialschicht ummantelt ist.

9. Komposit aus einem multifunktionale beschichteten Fasergittergewebe gemäß einem der Ansprüche 1 bis 7 oder nach Anspruch 8 auf einem Vlies oder einer Folie, vorzugsweise aus einem Gittergewebe aus Glasfasergarnen oder Glasfaserrovings auf einem Glasfaservlies.

10. Komposit nach Anspruch 8 oder 9, **dadurch gekennzeichnet, dass** die Gitteröffnungen 4x4 mm, 6x6 mm oder 10×10 mm betragen.

11. Komposit nach einem der Ansprüche 8 bis 10, **dadurch gekennzeichnet, dass** die Dehnung im Bereich von 2 bis 5 % liegt.

12. Komposit nach einem der Ansprüche 8 bis 11, **dadurch gekennzeichnet, dass** er auf der Rückseite des Vlieses zusätzlich eine Selbstklebefolie aufweist, die ggf. nach außen mit einem Trennpapier abgedeckt ist.

13. Komposit gemäß einem der Ansprüche 8 bis 12, **dadurch gekennzeichnet, dass** er eine Gesamtdicke von 2 bis 5 mm besitzt, vorzugsweise 3 bis 4 mm.

14. Verwendung eines multifunktionalen beschichteten Fasergittergewebes nach einem der Ansprüche 1 bis 7 oder eines Komposites nach einem der Ansprüche 8 bis 13 zur Armierung und gleichzeitigen Beheizung von Wand- und Bodenflächen in Gebäuden.

15. Verwendung nach Anspruch 14, **dadurch gekennzeichnet, dass** ein Komposit nach einem der Ansprüche 8 bis 13 zur Entkoppelung und Beheizung von Fußbodenflächen verwendet wird, wobei die Gesamthöhe des Komposites 2 bis 5 mm, insbesondere 3 bis 4 mm, beträgt.

## Claims

1. Multifunctional coated fibre mesh weave as sheetlike material, consisting of fibre materials interwoven crosswise and having mesh openings in the range from 1×1 mm to 20×20 mm; where the mesh structure is in stable form, where the individual fibre materials of the fibre mesh weave have been provided with a finish, **characterized in that** the individual fibre materials of the fibre mesh weave are ensheathed with an electrically conductive layer above the finish, where the thickness of the coated fibre mesh weave is 0.2 mm to 3 mm, where the mesh structure has a strength in the range from 500 to 5000 N/5 cm, measured by the strip tensile test according to DIN EN ISO 13934-1, where elongation is in the range from 2% to 25%, measured by the strip tensile test according to DIN EN ISO 13934-1.

2. Fibre mesh weave according to Claim 1, **characterized in that** the mesh weave provided with a finish layer is a glass fibre mesh weave.

3. Fibre mesh weave according to Claim 1 or 2, **characterized in that** the mesh openings are in the range from 3x3 mm to 10x10 mm.

4. Fibre mesh weave according to any of Claims 1 to 3, **characterized in that** the electrically conductive sheath includes a binder which is elastic in the dry state and an electrically conductive material selected from carbon particles, particles of conductive polymers and mixtures thereof.

5. Fibre mesh weave according to any of Claims 1 to 4, **characterized in that** the finish layer and the binder are selected from a group comprising styrenebutadiene rubber, acrylates, PVC, polyurethanes and ethylene-vinyl acetate.

6. Fibre mesh weave according to any of Claims 1 to 5, **characterized in that** the electrically conductive materials are composed of various carbon polymorphs, such as carbon platelets (graphenes, graphites) and/or carbon nanofibres or carbon nanotubes (CNTs).

7. Fibre mesh weave according to any of Claims 1 to 6, **characterized in that** it additionally has carbon filaments or carbon-laminated filaments in small areas in the range from 100 to 400 cm².

8. Composite composed of a multifunctional coated fibre mesh weave according to any of Claims 1 to 7 and at least one further uncoated fibre mesh weave, wherein the fibre mesh weaves have different-sized mesh openings, and the mesh weave having the smaller mesh openings is ensheathed by the electrically conductive material layer.

9. Composite composed of a multifunctional coated fibre mesh weave according to any of Claims 1 to 7 or according to Claim 8 on a web or a film, preferably composed of a mesh weave composed of glass fibre yarns or glass fibre rovings on a glass fibre web.

10. Composite according to Claim 8 or 9, **characterized in that** the mesh openings are 4x4 mm, 6x6 mm or 10x10 mm.

11. Composite according to any of Claims 8 to 10, **characterized in that** elongation is in the range from 2% to 5%.

12. Composite according to any of Claims 8 to 11, **characterized in that** it additionally has a self-adhesive film, optionally covered on the outside with a release paper, on the reverse side of the web.

13. Composite according to any of Claims 8 to 12, **characterized in that** it has a total thickness of 2 to 5 mm, preferably 3 to 4 mm.

14. Use of a multifunctional coated fibre mesh web according to any of Claims 1 to 7 or of a composite according to any of Claims 8 to 13 for reinforcing and simultaneously heating wall and floor areas in buildings.

15. Use according to Claim 14, **characterized in that** a composite according to any of Claims 8 to 13 is used for decoupling and heating of floor areas, wherein the total weight of the composite is 2 to 5 mm, especially 3 to 4 mm.

## Revendications

1. Tissu à mailles fibreux multifonctionnel, revêtu, sous forme de produit plat, constitué par des matériaux fibreux reliés en croix comme un tissu, présentant des ouvertures de maille dans la plage de 1×1 mm à 20x20 mm ; la structure à mailles se trouvant sous forme stable, les différents matériaux fibreux du tissu à mailles étant pourvus d'un apprêt, **caractérisé en ce que** les différents matériaux fibreux du tissu à mailles fibreux sont enrobés au-dessus de l'apprêt par une couche électriquement conductrice, l'épaisseur du tissu à mailles fibreux revêtu étant de 0,2 mm à 3 mm, la structure à mailles présentant une résistance dans la plage de 500 à 5000 N/5 cm, mesurée par l'essai de traction sur bande selon la norme DIN EN ISO 13934-1, l'allongement étant situé dans la plage de 2 à 25%, mesuré selon l'essai de traction sur bande selon la norme DIN EN ISO 13934-1.

2. Tissu à mailles fibreux selon la revendication 1, **caractérisé en ce que** le tissu à mailles pourvus d'une couche d'apprêt est un tissu à mailles en fibres de verre.

3. Tissu à mailles fibreux selon la revendication 1 ou 2, **caractérisé en ce que** les dimensions des ouvertures de maille sont situées dans la plage de 3x3 mm à 10x10 mm.

4. Tissu à mailles fibreux selon l'une quelconque des revendications 1 à 3, **caractérisé en ce que** l'enrobage électriquement conducteur présente un agent liant élastique à l'état sec et un matériau électriquement conducteur choisi parmi les particules de carbone, les particules de polymères conducteurs et leurs mélanges.

5. Tissu à mailles fibreux selon l'une quelconque des revendications 1 à 4, **caractérisé en ce que** la couche d'apprêt et l'agent liant sont choisis dans un groupe constitué par le caoutchouc de styrène-butadiène, les acrylates, le PVC, les polyuréthanes et l'éthylène-acétate de vinyle.

6. Tissu à mailles fibreux selon l'une quelconque des revendications 1 à 5, **caractérisé en ce que** les matériaux électriquement conducteurs sont choisis parmi diverses modifications du carbone, telles que les plaquettes de carbone (graphène, graphite) et/ou les nanofibres de carbone ou les nanotubes de carbone (NTC).

7. Tissu à mailles fibreux selon l'une quelconque des revendications 1 à 6, **caractérisé en ce qu'**il présente en outre sur de petites surfaces dans la plage de 100 à 400 cm² des fils de carbone ou des fils stratifiés de carbone.

8. Composite constitué par un tissu à mailles fibreux multifonctionnel, revêtu, selon l'une quelconque des revendications 1 à 7 et au moins un autre tissu à mailles fibreux non revêtu, les tissus à mailles présentant des ouvertures de mailles de dimensions différentes et le tissu à mailles présentant les ouvertures de maille les plus petites étant enrobé par la couche de matériau électriquement conducteur.

9. Composite constitué par un tissu à mailles fibreux multifonctionnel, revêtu, selon l'une quelconque des revendications 1 à 7 ou selon la revendication 8 sur un non-tissé ou une feuille, lequel composite est de préférence constitué par un tissu à mailles en fils en fibres de verre ou en stratifils en fibres de verre sur un non-tissé en fibres de verre.

10. Composite selon la revendication 8 ou 9, **caractérisé en ce que** les ouvertures de maille présentent une dimension de 4x4 mm, de 6x6 mm ou de 10x10 mm.

11. Composite selon l'une quelconque des revendications 8 à 10, **caractérisé en ce que** l'allongement se situe dans la plage de 2 à 5%.

12. Composite selon l'une quelconque des revendications 8 à 11, **caractérisé en ce qu'**il présente en plus, sur l'arrière du non-tissé, une feuille autoadhésive qui est le cas échéant recouverte vers l'extérieur par un papier antiadhésif.

13. Composite selon l'une quelconque des revendications 8 à 12, **caractérisé en ce qu'**il présente une épaisseur totale de 2 à 5 mm, de préférence de 3 à 4 mm.

14. Utilisation d'un tissu à mailles fibreux multifonctionnel, revêtu, selon l'une quelconque des revendications 1 à 7 ou d'un composite selon l'une quelconque des revendications 8 à 13 pour l'armature et le chauffage simultané de surfaces murales et de sol dans des bâtiments.

15. Utilisation selon la revendication 14, **caractérisée en ce qu'**on utilise un composite selon l'une quelconque des revendications 8 à 13 pour le désaccouplement et le chauffage de surfaces de sol, la hauteur totale du composite étant de 2 à 5 mm, en particulier de 3 à 4 mm.
